## Europäisches Patentamt

## European Patent Office

## Office européen des brevets

(11) Veröffentlichungsnummer : **0 013 756**
**B1**

(12)

# EUROPÄISCHE PATENTSCHRIFT

(45) Veröffentlichungstag der Patentschrift :
22.09.82

(21) Anmeldenummer : 79105364.8

(22) Anmeldetag : 24.12.79

(51) Int. Cl.³ : **B 66 F 9/07**, B 66 F 9/14,
B 65 G 1/04

(54) Einrichtung zum Einbringen und Ausheben von Lagergut in bzw. aus Lagerregalen.

(30) Priorität : 09.01.79 AT 168/79

(43) Veröffentlichungstag der Anmeldung :
06.08.80 (Patentblatt 80/16)

(45) Bekanntmachung des Hinweises auf die Patenterteilung : 22.09.82 Patentblatt 82/38

(84) Benannte Vertragsstaaten :
CH DE FR IT NL SE

(56) Entgegenhaltungen :
DD A 56 215
DE A 2 305 126
DE B 1 222 857
DE B 2 517 900
DE C 654 465
DE C 1 152 666
DE U 1 721 684
FR A 2 123 144
FR A 2 326 355
US A 3 321 147

(73) Patentinhaber : Kranzlmüller, Reinhard
Thomas-Rhomberg-Strasse 12
A-6850 Dornbirn (AT)

(72) Erfinder : Kranzlmüller, Reinhard
Thomas-Rhomberg-Strasse 12
A-6850 Dornbirn (AT)

(74) Vertreter : Hefel, Herbert, Dipl.-Ing.
Egelseestrasse 65a Postfach 61
A-6800 Feldkirch (AT)

Einrichtung zum Einbringen und Ausheben von Lagergut in bzw. aus Lagerregalen

Die Erfindung betrifft eine Einrichtung zum Einbringen und Ausheben von Lagergut in bzw. aus Lagerregalen, mit wenigstens einem um eine horizontal verlaufende Achse verdrehbaren Ausleger, dessen freies Ende Ausnehmungen, Einbuchtungen, Fortsätze od. dgl. zum Ansetzen am Lagergut aufweist, und welcher in einem Träger höhenverstellbar gehalten ist.

Bei einer solchen aus der FR-A-21 23 144 bekannten Einrichtung können am freien Ende eines um eine horizontale Achse schwenkbaren Auslegers Lasten befestigt werden. Dieser Ausleger ist einstückig ausgeführt, wobei etwa im Mittelbereich zwischen der Drehachse dieses Auslegers und dem freien Ende desselben ein weiterer Hebel angreift, welcher eine eigene Drehachse haben muß. Diese Konstruktion ist aufwendig und kompliziert, da zwei voneinander unabhängige Aufhängedrehachsen für den Ausleger und den Hebel erforderlich sind. Außerdem muß die Drehachse des Auslegers noch entsprechend gegenüber der Drehachse des Hebels höhenverstellbar sein.

Bei einer Einrichtung gemäß der FR-A-23 26 355 sind nach zwei entgegengesetzten Seiten hin voneinander unabhängig Ausleger vorgesehen, so daß ein Umschwenken des Lagergutes von der einen auf die gegenüberliegende Regalseite nicht möglich ist. Sollten also entsprechende Gegenstände von dem einen Regal zum anderen Regal geführt werden, so müßten diese nach unten transportiert, dort durch andere Fördermittel angehoben, weggeführt und auf den anderen Ausleger aufgelegt werden.

Die vorliegende Erfindung hat sich zur Aufgabe gestellt, eine Einrichtung der eingangs genannten Art zu schaffen, mit welcher besonders schwer zu handhabendes Lagergut in einfacher Weise gehandhabt werden kann. Ferner soll diese Einrichtung auch dazu geeignet sein, Lasten verschiedenster Art innerhalb oder außerhalb von Lagerregalen in der Höhe und der Seitenlage bei annähernd horizontaler Bewegung des Lagergutes zu verstellen.

Erfindungsgemäß gelingt dies dadurch, daß in Verbindung mit den eingangs genannten Merkmalen nach dem Oberbegriff des Anspruches 1 die im Kennzeichen des Anspruches 1 aufgeführten Merkmale angewendet werden.

Die bei der Erfindung verwendete gerade Führung ist im Prinzip bereits aus der DD-A-56 215 allgemein und in Anwendung bei einem Wipp-Kran (DE-C-654 465) bekannt.

Durch die erfindungsgemäßen Maßnahmen kann eine Last in einem Lagerregal bzw. an einer sonstigen Stelle vorerst angehoben werden, worauf dann durch eine einfache, auf den Ausleger einwirkende Drehbewegung eine zumindest annähernd horizontale Bewegung des Lagergutes erfolgen kann, indem nämlich die beiden Arme des Auslegers in Abhängigkeit voneinander deren gegenseitige Winkeleinstellung ändern. Durch diese Maßnahme ist auch der Raum zwischen benachbarten Lagerregalen relativ schmal zu bemessen, so daß ein Lagerraum wesentlich besser ausgenützt werden kann. Das Lagergut kann dann so weit seitlich verschoben werden, daß es praktisch im Mittelbereich des den Ausleger haltenden Trägers liegt, so daß ein nur sehr geringer Platzaufwand erforderlich ist. Eine derartige Einrichtung ist auch nach beiden Seiten hin einsetzbar, da bei weiterem Verdrehen des Auslegers der frei auskragende Arm eben nach der anderen Seite hin ausschwenkt. Eine derartige Einrichtung ist vielfach einsetzbar und nicht nur im Arbeitseinsatz bringt sie Vorteile mit sich, sondern ist zudem infolge der geringen Teileanzahl und einer robusten Ausgestaltungsmöglichkeit praktisch wartungsfrei.

Besondere Vorteile der Erfindung werden in der nachstehenden Beschreibung anhand der Zeichnungen noch näher erläutert. Es zeigen :

Fig. 1 eine erfindungsgemäße Einrichtung mit zwei mit Abstand voneinander angeordneten Auslegern, welche in einem Träger gehalten sind ;

Fig. 2 eine Schrägsicht der wesentlichsten Teile des Auslegers ;

Fig. 3 eine Seitenansicht eines Auslegers in drei verschiedenen Stellungen ;

Fig. 4 eine Einsatzmöglichkeit der erfindungsgemäßen Einrichtung in einem Lagerregal.

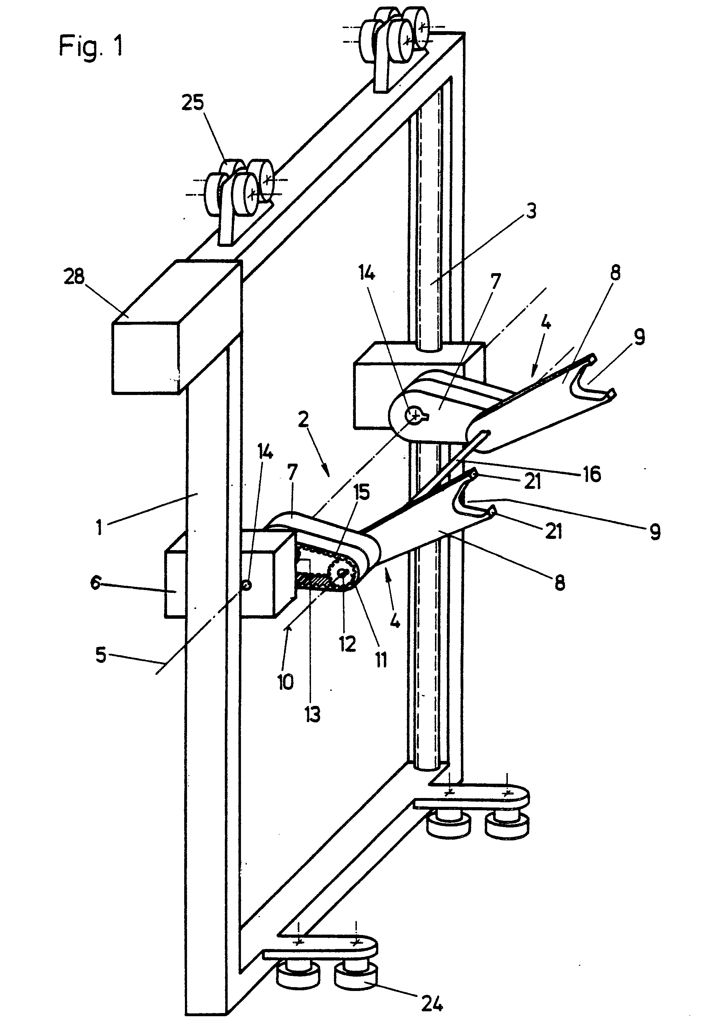

Die Einrichtung gemäß Fig. 1 besteht aus einem rahmenartigen Träger 1, in welchem die Hebeeinrichtung 2 höhenverstellbar gehalten ist. Die Höhenverstellung kann beispielsweise durch angetriebene Spindeln 3 erfolgen, welche zweckmäßigerweise beiden vertikalen Stehern des Trägers 1 zugeordnet sind. Die Hebeeinrichtung selbst besteht aus zwei mit Abstand voneinander angeordneten Auslegern 4, welche um die annähernd horizontale Achse 5 an einem Tragteil 6 verdrehbar sind. Jeder Ausleger 4 besteht aus einem ersten Arm 7 und einem zweiten, frei auskragenden Arm 8. Der frei auskragende Arm weist an dessen freiem Ende Ausnehmungen 9 bzw. Einbuchtungen oder Fortsätze auf, mit welchen das Lagergut erfaßt werden kann.

Eine besondere Ausführungsform der erfindungsgemäßen Einrichtung liegt nun darin, daß der frei auskragende Arm 8 des Auslegers 4 in Abhängigkeit von der Drehbewegung des ersten Armes 7 relativ zu diesem verdrehbar ist. Zu diesem Zweck ist an dem frei auskragenden Arm 8 des Auslegers 4 im Bereich dessen Drehachse 10 ein Zahnrad 11 angeordnet, welches verdrehfest mit dem Arm 8 verbunden ist. Aus Konstruktionsgründen greift der erste Arm 7 zwischen das Zahnrad 11 und den Arm 8 ein. Diese beiden Teile sind also über eine Achse 12 miteinander verbunden. Ferner ist achsgleich mit der Drehachse 5 des ersten Hebels 7 ein weiteres Zahnrad 13 angeordnet, welches mit dem entsprechenden Tragteil 6 fest verbunden ist. Dieses Zahnrad 13 kann sich also gegenüber dem Tragteil 6 nicht bewegen. Der Arm 7 ist mittels des Achsbolzens 14 durch das Zahnrad 13 hindurchgeführt und greift in ein Lager an dem Tragteil 6 ein. Mit dem Achsbolzen 14 ist ferner ein Antrieb gekuppelt, welcher innerhalb des Tragteiles 6 angeordnet ist. Um einen vollkommenen Gleichlauf der beiden Ausleger 4 zu erreichen, können in beiden Tragteilen 6 Antriebe vorgesehen werden. Die beiden beschriebenen Zahnräder 11 und 13 sind über einen Zahnriemen 15 miteinander in Wirkverbindung.

Falls nun der Achsbolzen 14 und somit der erste Arm 7 angetrieben werden, das Zahnrad 13 jedoch feststeht, muß sich das Zahnrad 10 an dem Zahnriemen 15 abrollen, so daß dadurch eine Relativbewegung des Armes 8 gegenüber dem Arm 7 hervorgerufen wird. Die Übersetzung kann dabei so gewählt werden, daß das frei auskragende Ende des Armes 8 stets in gleiche Höhenlage bezüglich der Tragteile 6 einnimmt, so daß ein exakt horizontales Verschieben einer Last möglich ist.

Im Rahmen der Erfindung ist es selbstverständlich möglich, anstelle der Zahnräder 11 und 13 andere Antriebselemente vorzusehen und diese mit anderen Mitteln in Wirkverbindung zu bringen. So wäre es denkbar, anstelle eines Zahnriemens 15 ein weiteres Zahnrad zwischen den beiden Zahnrädern 11 und 13 vorzusehen, wobei dieses Zahnrad dann drehbar an dem Arm 7 gelagert wäre. Auch wäre es möglich, hier als Antriebselemente Kettenräder vorzusehen, welche dann über eine Kette miteinander in Verbindung stehen.

Um einen möglichst guten Gleichlauf der beiden Ausleger 4 zu erzielen, können zusätzlich die beiden frei auskragenden Arme 8 der Ausleger 4 über eine Verbindungsschiene fest miteinander verbunden werden. Zweckmäßigerweise wird diese Verbindungsschiene 16 im Bereich der Drehachsen der Arme 8 angebracht. Es ist in diesem Zusammenhang auch denkbar, dieser Verbindungsschiene 16 den Antrieb für die Ausleger zuzuordnen, wobei in diesem Falle der Achsbolzen 14 lediglich in den Tragteilen 6 zu Lagerzwecken eingreift. Durch Verdrehen der Verbindungsschiene 16 wird dann auch das Zahnrad 11 angetrieben, so daß über den Zahnriemen 15 bzw. andere entsprechende Mittel ein Verschwenken des Armes 7 um die Achse 5 hervorgerufen wird.

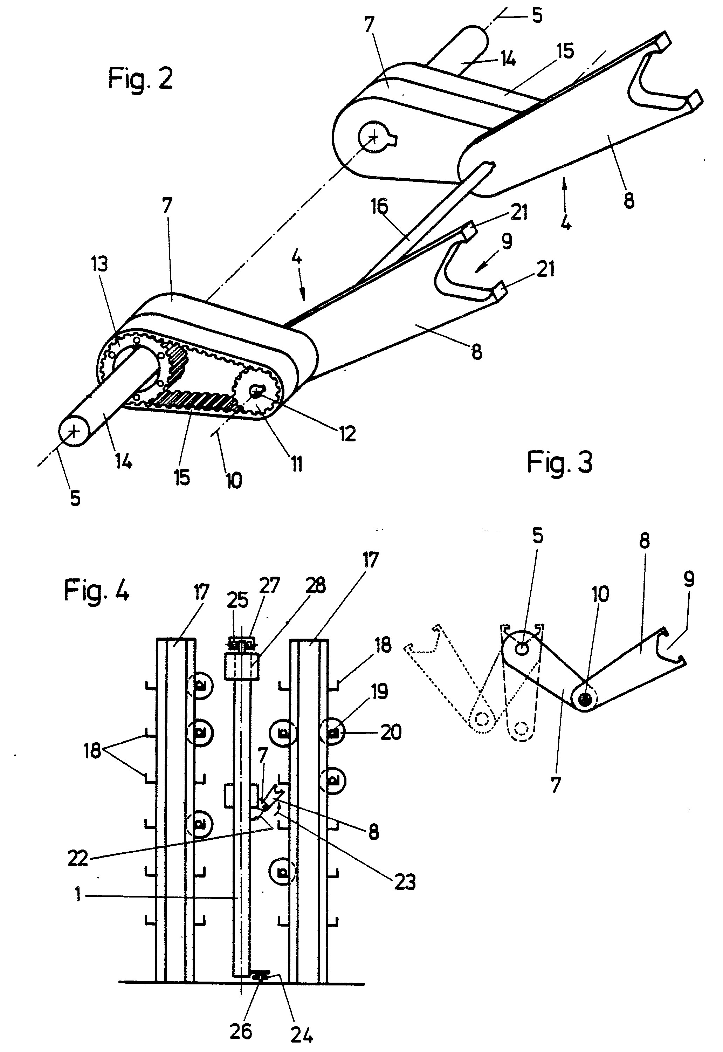

Es wurde schon erwähnt, daß die erfindungsgemäße Einrichtung sowohl zur Lagerhaltung als auch in sonstigen Betriebseinsätzen verwendbar ist. So wäre es auch denkbar, lediglich einen Ausleger 4 vorzusehen, mit welchem dann entsprechende Hebe- und Verschiebevorgäng durchgeführt werden können. Es ist diesbezüglich im besonderen der Fig. 3 zu entnehmen, daß durch Verschwenken des Auslegers 4 das in dem frei auskragenden Arm 8 eingehängte Lagergut in horizontaler Richtung verschoben wird. Es ist dadurch möglich, besonders exakt durchzuführende Verschiebearbeiten zu bewerkstelligen.

In. Fig. 4 ist eine Einsatzmöglichkeit für die in Fig. 1 dargestellte Einrichtung gezeigt. Es sind hier Lagergestelle 17 vorgesehen, an deren vertikalen Trägern hakenförmige Fortsätze 18 vorgesehen sind, in welche mit Achsstummeln 19 versehene, zylindrische Körper 20 eingesetzt sind. Die Lagerung dieser zylindrischen Körper 20 soll auf relativ engem Raum erfolgen können. Dazu ist es auch erforderlich, daß der Raum zwischen den Lagerstellen 17 eng bemessen werden kann. Hier wirkt sich die erfindungsgemäße Einrichtung besonders günstig aus, da der hier zu lagernde Körper 20 in den Bereich zwischen den Stehern des Trägers 1 hineingeschoben werden kann, um dann mittels des Trägers 1 in Längsrichtung der Regale ausfahren zu können. Die Ausleger 4 werden in den Bereich unterhalb eines Achsstummels 19 der Körper herangebracht, worauf dann die Tragteile 6 der Ausleger 4 entsprechend angehoben werden. Die Achsstummel 19 werden sodann von den seitlich der Ausnehmung 9 verbleibenden Fortsätzen 21 des Armes 8 erfaßt und aus den hakenartigen Fortsätzen 18 herausgehoben. Dann wird die Drehbewegung der Arme 7 und 8 in Gang gesetzt, wobei der eine Arm 7 in Pfeilrichtung 22 nach unten schwenkt und der eine Arm 8 in entsprechender Abhängigkeit in Pfeilrichtung 23 nach oben. Es wird dadurch ein Ausgleich der Verschwenkbewegungen geschaffen, so daß das Lagergut, also hier der zylinderförmige Körper 20, in annähernd horizontaler Lage aus dem Lagergestell 17 herausgezogen wird. Sobald die beiden Arme 7 und 8 des Auslegers 4 in annähernd vertikaler Stellung voreinander liegen, kann der Träger 1 in Längsrichtung der Lagergestelle 17 ausgefahren werden, so daß dort das entnommene Lagergut weiter transportiert werden kann.

Je nach den zu transportierenden Lasten ist das frei auskragende Ende des Armes 8 selbstverständlich in verschieden Ausführungsformen ausgestaltet. So könnte dieses freie Ende auch hakenartige Fortsätze, eine Öse, einen Lasthaken oder dgl. ausweisen. Bei einem Einsatz in Lagergestellen eignet sich die erfindungsgemäße Einrichtung in hervorragender Weise für die Lagerhaltung von Druckwalzen, von auf Rollen gewickelten Teppichbelägen usw. Eine besondere Einsatzmöglichkeit ist also stets dann gegeben, wenn insbesondere langgestreckte Profile oder anderes langgestrecktes Gut gelagert oder befördert werden soll.

In der Fig. 1 und der Fig. 4 sind die Führungsmöglichkeiten für den Träger 1 dargestellt, wobei die am Träger vorgesehen Laufrollen 24, 25 an entsprechenden Schienen 26 und 27 verfahrbar geführt sind. Am Träger 1 ist ferner noch ein kastenförmiger Behälter 28 angebracht, welcher eine Batterie für einen Batterieantrieb sowohl für die Höhenverstellung als auch für die Bewegung des Auslegers 4 aufnehmen kann. Selbstverständlich ist auch eine andere Antriebsmöglichkeit, beispielsweise durch Schleifleitungen oder dgl. denkbar.

## Ansprüche

1. Einrichtung zum Einbringen und Ausheben von Lagergut in bzw. aus Lagerregalen (17), mit wenigstens einem um eine annähernd horizontal verlaufende Achse (5) verdrehbaren Ausleger (4), dessen freies Ende Ausnehmungen (9), Einbuchtungen, Fortsätze od. dgl. zum Ansetzen am Lagergut aufweist, und welcher in einem Träger (1) höhenverstellbar gehalten ist, dadurch gekennzeichnet, daß der Ausleger (4) aus zwei um eine annähernd horizontale Achse (10) drehbar miteinander verbundenen Armen (7, 8) gebildet ist und daß mit dem frei auskragenden Arm (8) des Auslegers (4) im Bereich seiner Drehachse ein Antriebselement, zum Beispiel ein Zahnrad (11) oder Kettenrad fest verbunden ist und achsgleich zur Drehachse (5) des ersten Armes (7) des Auslegers (4) ein weiteres Antriebselement, zum Beispiel ein Zahnrad (13) oder Kettenrad, ortsfest angeordnet ist, wobei die beiden Antriebselemente zum Beispiel über ein Zwischenzahnrad oder eine Kette (15) miteinander in Wirkverbindung stehen, und daß am ersten Arm (7) oder dem zweiten, frei auskragenden Arm (8) des Auslegers (4) im Bereich der Achse (5) bzw. der Drehachse (10) ein Antrieb vorgesehen ist.

2. Einrichtung nach Anspruch 1, dadurch gekennzeichnet, daß zwei Ausleger (4) mit Armen (7, 8) mit Abstand voneinander angeordnet sind und die beiden frei auskragenden Arme (8) im Bereich ihrer Drehachsen (10) mit den ersten Armen (7) über eine Verbindungsschiene fest miteinander verbunden sind.

## Claims

1. A device for the insertion and removal of stored goods respectively into and from storage racks (17), with at least one boom (14) rotatable about an approximately horizontally extending axis (5), the free end of said boom having recesses (9), indentations, extensions or the like for application to the stored goods, and which boom is held vertically adjustably in a support (1), characterised in that the boom (4) is formed by two arms (7, 8) rotatably connected to one another about an approximately horizontal axis (10), and in that a drive member, for example a gearwheel (11) or sprocket wheel, is securely connected to the freely projecting arm (8) of the boom (4) in the vicinity of its axis of rotation, and coaxially with the axis of rotation (5) of the first arm (7) of the boom (4) there is arranged stationarily another drive member, for example a gearwheel (13) or sprocket wheel, the two drive members being in operative connection with one another, for example via an intermediate gearwheel or a chain (15), and in that a drive means is provided at the first arm (7) or at the second, freely projecting arm (8) of the boom (14) respectively in the vicinity of the axis (5) or axis of rotation (10).

2. Device according to claim 1, characterised in that two booms (4) with arms (7, 8) are arranged spaced apart and the two freely projecting arms (8) in the vicinity of their axes of rotation (10) with the first arms (7) are securely interconnected via a connecting bar.

## Revendications

1. Dispositif pour introduire et retirer des produits stockés dans et sur des rayonnages de stockage (17), avec au moins une console (4) pivotant sur un axe sensiblement horizontal (5) console dont l'extrémité libre présente des évidements (9) des encoches, des saillies ou similaires qui s'appuient sur le produit stocké, cette console étant maintenue réglable en hauteur dans un support (1), dispositif caractérisé en ce que la console (4) est constituée par deux bras (7, 8) reliés entre eux en pivotant sur un axe (10) sensiblement horizontal et en ce qu'un élément d'entraînement, par exemple en engrenage (11) ou une roue à chaîne, est assemblé solidairement avec le bras en porte-à-faux (8) de la console (4) dans le champ de son axe de rotation et, coaxialement à l'axe de rotation (5) du premier bras (7) de la console (4), un autre élément d'entraînement, par exemple un engrenage (13) ou une roue à chaîne, est disposé à poste fixe, les deux éléments d'entraînement étant en liaison de fonctionnement mutuel, par exemple par un engrenage intermédiaire ou une chaîne (15) et en ce qu'une commande est prévue sur le premier bras (7) ou sur le second bras en porte-à-faux (8) de la console (4) dans le champ de l'axe (5) ou de l'axe de rotation (10).

2. Dispositif selon la revendication 1, caractérisé en ce que deux consoles (4) avec des bras (7, 8) sont disposées à distance l'une de l'autre et les deux bras en porte-à-faux (8) sont reliés rigidement entre eux dans la zone de leurs axes de rotation (10) avec les premiers bras (7), par une tige de liaison.

Fig. 1

Fig. 2

Fig. 3

Fig. 4